# EUROPÄISCHE PATENTSCHRIFT

(11) **EP 0 965 896 B1**
(45) Veröffentlichungstag und Bekanntmachung des Hinweises auf die Patenterteilung: **10.11.2004**
(21) Anmeldenummer: 99110688.1
(22) Anmeldetag: 02.06.1999
(51) Int. Cl.: G05B 19/409

(54) **Numerische Steuerung mit einem räumlich getrennten Eingabegerät**
Numerical controller with a remote input device
Commande numérique avec un dispositif d'entrée à distance

(30) Priorität: 17.06.1998 DE 19826875
(43) Veröffentlichungstag der Anmeldung: 22.12.1999
(73) Patentinhaber: Dr. Johannes Heidenhain GmbH, 83292 Traunreut (DE)
(72) Erfinder: Baumgartner, Alfons Dipl.Ing. (FH), 83224 Grassau (DE)

(56) Entgegenhaltungen:
- EP-A- 0 742 498
- EP-A- 0 742 500
- EP-A- 0 742 505
- WO-A-95/15518
- DE-A- 4 312 305

## Beschreibung

Die Erfindung betrifft eine Numerische Steuerung für Werkzeugmaschinen oder Roboter mit einem räumlich getrennten Eingabegerät nach dem Oberbegriff des Anspruchs 1 und ein Verfahren zu deren Betrieb nach dem Oberbegriff des Anspruchs 12.

Aus dem deutschen Gebrauchsmuster G 82 36 366.8 ist bekannt, daß Werkzeugmaschinen zusätzlich zu einer Bedientafel eine zusätzliche mobile Hand-Vorschubeinrichtung für spezielle Funktionen aufweisen können. Zu der Bedientafel gehört meist auch eine Anzeigeeinrichtung, so daß der Benutzer dort alle Funktionen der Steuerung der Maschine auslösen und überwachen kann. Die mobile Hand-Vorschubeinrichtung wird auch als elektronisches Handrad bezeichnet und ermöglicht es dem Benutzer, daß er beispielsweise den Vorschub für eine oder mehrere Maschinenachsen nicht nur wenn er an der Bedientafel steht, sondern auch wenn er sich an einer weitgehend beliebigen Stelle befindet, eingeben kann. Um dies zu ermöglichen, weist die mobile Hand-Vorschubeinrichtung verschiedene Tasten, beispielsweise zur Auswahl einer Achse, und einen Drehgeber zur Realisierung eines Handrades auf. Die Verbindung zwischen Hand-Vorschubeinrichtung und Steuerung erfolgt dabei über ein Kabel, das die zur Signalübertragung benötigten Leitungen aufweist.

Diese Ausführungsform einer Hand-Vorschubeinrichtung weist den Nachteil auf, daß sie nicht fehlertolerant ausgestaltet ist.

Aus der DE 297 10 026 ist eine numerische Steuerung mit einem räumlich getrennten Bediengerät bekannt, das ein Handrad zur Eingabe von Stellbefehlen aufweist. Die Übertragung der Stellbefehle von dem räumlich getrennten Bediengerät an die Steuerung erfolgt dabei in einem festen Zeitraster mittels einer drahtlosen Übertragungseinrichtung gemäß dem DECT-Standard. Eine mechanische Verbindung zwischen Steuerung und Bediengerät, beispielsweise mittels eines Kabels, besteht nicht.

Diese Ausführungsform weist den Nachteil auf, daß sie besonders leicht durch die in einer Maschinenhalle vorhandenen elektromagnetischen Felder gestört werden kann. Bei Benutzung des Bediengeräts besteht daher permanent die Gefahr der Fehlfunktion der Maschine nicht nur aufgrund des Versagens von elektrischen Baugruppen, sondern zusätzlich aufgrund von Störungen der Funkübertragung.

Es werden daher zunehmend Bestrebungen unternommen, um Steuerungen für Werkzeugmaschinen einschließlich deren Eingabeeinrichtungen fehlertolerant auszugestalten. Dies bedeutet, daß ein Fehler nicht zu einer Gefährdung des Benutzers oder einer Beschädigung der Maschine führen darf. Dies wird im allgemeinen dadurch erreicht, daß redundante Systeme verwendet werden, die sich selbst überprüfen und sobald sie einen Fehler detektieren eine Fehlerbehandlung durchführen. Dabei wird die Maschine in der Regel stillgesetzt, so daß keine Bewegung der Maschinenkomponenten mehr erfolgt. Zusätzlich wird meist eine Fehlermeldung ausgegeben, die den detektierten Fehler angibt und dadurch dessen Behebung erleichtert.

Bezüglich der Anforderungen an fehlersichere Systeme, insbesondere Steuerungen, existieren bereits verschiedene Richtlinien. In der EN 954-1 ist festgelegt, daß ein fehlersicheres System der Kategorie 3 durch einen einzelnen Fehler nicht in einen unsicheren Betriebszustand wechselt, sondern trotz des Fehlers weiterhin ein sicheres System bleibt.

Es existieren bereits von der Bedientafel einer Steuerung für eine Werkzeugmaschine räumlich getrennte Eingabeeinrichtungen, bei denen ein Not-Aus-Taster, Tasten zur Auswahl einer Achse der Werkzeugmaschine, ein Handrad und weitere Eingabemittel vorgesehen sind. Um die Fehlersicherheit zu erhöhen sind zusätzlich noch Zustimmtasten vorgesehen. Diese müssen gleichzeitig mit den Eingabemitteln der Eingabeeinrichtung betätigt werden. Dadurch, daß der Benutzer zum Auslösen einer sicherheitsrelevanten Funktion zwei Tasten betätigen muß, soll sichergestellt werden, daß der Benutzer keine Fehlfunktion oder einen unsicheren Betriebszustand der Maschine durch eine einzelne Eingabe auslösen kann.

Dabei ist von Nachteil, daß der Benutzer für eine einfache Eingabe mehrere Tasten betätigen muß. Weiterhin nachteilig sind die vielen Verbindungsleitungen zwischen Steuerung und dem Eingabegerät, die zur Weiterleitung der Ausgangssignale der Zustimmtasten und sonstiger Signale erforderlich sind.

Die EP 0 742 500 A2 zeigt ein von der Steuerung räumlich getrenntes Eingabegerät. Zur Erhöhung der Sicherheit werden zweikanalige Eingaben mit einer Signatur versehen und über eine Leitung übertragen.

Die WO 95/15518 A1 zeigt eine Auswerteschaltung für die Sensoren eines Anti-Blockier-Systems einer Bremsanlage. Die Sensorsignale werden durch zwei Prozessoren ausgewertet, deren Ergebnisse miteinander verglichen werden.

Aufgabe der vorliegenden Erfindung ist es daher, ein von einer Bedientafel einer Steuerung räumlich getrenntes Eingabegerät derart auszugestalten, daß ein einzelner Fehler nicht zu einem unsicheren Betrieb der durch die Steuerung gesteuerten Maschine führt. Weiterhin soll die Handhabung des Eingabegeräts möglichst benutzerfreundlich sein, weshalb spezielle Zustimmtasten vermieden werden sollen. Eine weitere Aufgabe besteht darin, das Eingabegerät möglichst preisgünstig zu realisieren.
Diese Aufgabe wird durch ein Eingabegerät mit den im Anspruch 1 angegebenen Merkmalen und durch ein Verfahren zum Betrieb dieses Eingabegeräts gemäß Anspruch 12 gelöst.

Weiterbildungen und vorteilhafte Ausgestaltungen des erfindungsgemäßen Eingabegeräts sind den jeweils abhängigen Ansprüchen zu entnehmen.

Das erfindungsgemäße Eingabegerät weist den Vorteil auf, daß bereits im Eingabegerät selber eine Vorverarbeitung der Eingangssignale erfolgt. Dadurch kann bereits im Eingabegerät festgestellt werden, ob eine technische Fehlfunktion der Taster, Schalter oder des Handrads vorliegt und es kann durch das Eingabegerät bei einer Fehlfunktion eine entsprechende Fehlermeldung an die Steuerung weitergeleitet werden. Durch diese Vorverarbeitung im Eingabegerät kann weiterhin vorteilhaft die Anzahl der Verbindungsleitungen zwischen Eingabegerät und Steuerung reduziert werden, wodurch eine leichtere Handhabung und preisgünstigere Realisierung erreicht wird. Spezielle Zustimmtasten können aufgrund dieser Maßnahmen zur Fehlerüberwachung entfallen. Weiterhin vorteilhaft ist die regelmäßige Überwachung der Verbindung zwischen dem Eingabegerät und der Steuerung.

Die Erfindung wird im folgenden anhand der in der Zeichnung dargestellten Ausführungsformen näher erläutert. Es zeigt:
- Fig. 1:: eine mögliches Blockschaltbild des erfindungsgemäßen Eingabegeräts und
- Fig. 2:: eine mögliche Realisierung des erfindungsgemäßen Eingabegeräts.

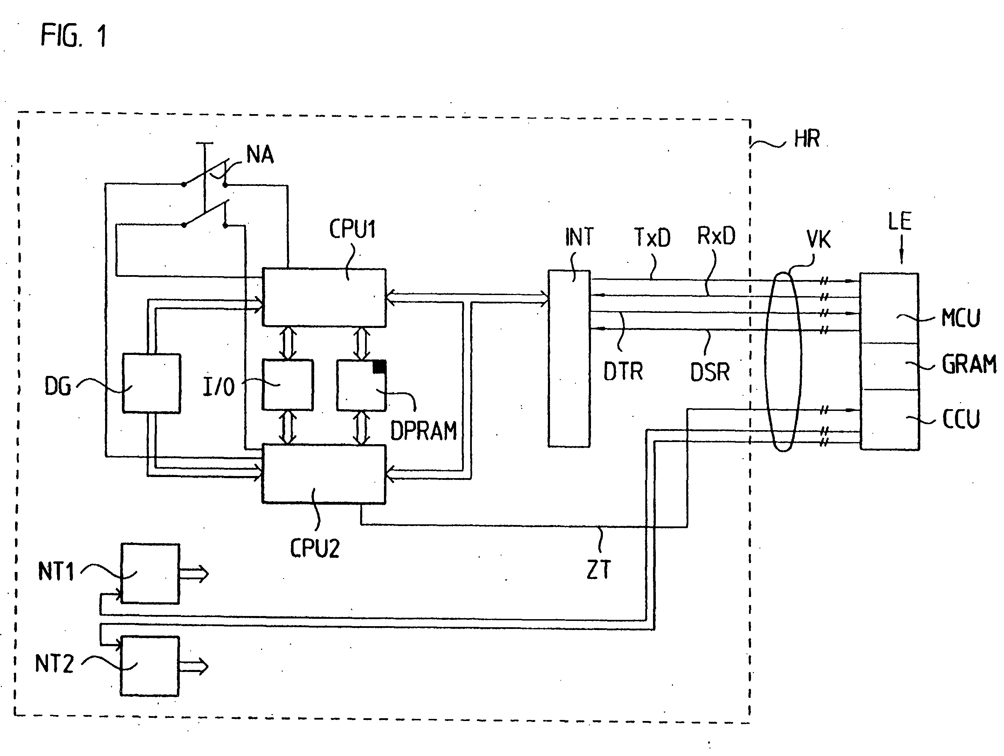

Fig. 1 zeigt die schaltungstechnische Realisierung des erfindungsgemäßen Eingabegeräts HR. Ein erster Prozessor CPU1 ist mit einem Drehgeber DG, einem Not-Aus-Taster NA, einer Ein-/Ausgabe-Baugruppe I/O, einem dualported RAM DPRAM, und einer Schnittstelle INT verbunden. Weiterhin ist ein zweiter Prozessor CPU2 vorgesehen, der ebenfalls mit dem Drehgeber DG, dem Not-Aus-Taster NA, der Ein-/Ausgabe-Baugruppe I/O, dem dualported RAM DPRAM und mit der Schnittstelle INT verbunden ist. Der zweite Prozessor CPU2 ist zusätzlich über eine Leitung ZT mit der Steuerung LE verbunden. Weiterhin ist mindestens ein Netzteil vorgesehen, das den einzelnen Baugruppen die jeweils benötigte Versorgungsspannung zuleitet.

Dieses eine Netzteil wird durch die beiden voneinander unabhängigen Prozessoren CPU1 und CPU2 überwacht. Zur Erhöhung der Betriebssicherheit können zwei Netzteile NT1 und NT2 im Eingabegerät HR vorgesehen sein, deren Primärspannung über separate, voneinander unabhängige Leitungen von der Steuerung LE aus zugeleitet wird. Dadurch kann ein einzelner Fehler in einem Netzteil nicht nur sicher erkannt werden, sondern ein Fehler führt, bei redundanter und entkoppelter Spannungszuführung zu den einzelnen Baugruppen, auch nicht zu einem kompletten Ausfall des Eingabegeräts HR.

Im Not-Aus-Taster NA werden zwei Taster für zwei Leitungen zusammengefaßt, wodurch eine redundante Realisierung des Not-Aus-Tasters NA erreicht wird. Für einen wechselseitigen zyklischen Test der Not-Aus Eingänge der Prozessoren CPU1 und CPU2 und der dafür vorgesehenen Auswertebaugruppen wird das Eingangssignal für den einen Taster von dem ersten Prozessor CPU1 bereitgestellt und dem zweiten Prozessor CPU2 zur Auswertung zugeleitet; das Eingangssignal für den anderen Taster wird von dem zweiten Prozessor CPU2 bereitgestellt und dem ersten Prozessor CPU1 zur Auswertung zugeleitet. Dadurch wird bei einem wechselseitigen voneinander unabhängigen Test eines Tasters dessen zugehörige Leitungen und Auswertebaugruppen überprüft, während in mindestens einem Prozessor weiterhin die Betätigung des Not-Aus Tasters NA durch den Benutzer erkannt werden kann.

Zwei zueinander um 90° phasenverschobene Ausgangssignale des Drehgebers DG werden über Entkopplungswiderstände den beiden Prozessoren CPU1 und CPU2 zugeleitet. Die Prozessoren CPU1 und CPU2 ermitteln aus den zyklisch abgefragten Ausgangssignalen des Drehgebers DG die vom Benutzer eingegebenen Werte. Dabei ist darauf zu achten, daß die Abfrage der Ausgangssignale des Drehgebers DG gemäß dem Shannon'schen Abtasttheorem mit ausreichend hoher Frequenz erfolgt, damit die tatsächlich vom Benutzer durchgeführte Eingabe fehlerfrei ermittelt wird. Weiterhin müssen die Abfragen der Ausgangssignale des Drehgebers DG durch beide Prozessoren CPU1 und CPU2 im wesentlichen mit gleicher Frequenz erfolgen, da sonst die beiden Prozessoren CPU1 und CPU2 unterschiedliche Bewegungswerte aus den Ausgangssignalen des Drehgebers DG ermitteln.

Die Schnittstelle INT des Eingabegeräts HR ist über die Leitungen TxD, RxD, DTR und DSR mit der Steuerung LE, bestehend aus MCU- und CCU-Baugruppe sowie gemeinsamem Speicher GRAM, verbunden. Das Verbindungskabel VK beinhaltet diese Leitungen sowie die Leitungen zur Spannungsversorgung für die beiden Netzteile NT1 und NT2 und die Zustimmleitung ZT. Somit beinhaltet das Verbindungskabel zwischen Steuerung LE und Eingabegerät HR wesentlich weniger Leitungen als bisher. Das Verbindungskabel VK ist vorteilhaft gegen elektromagnetische Strahlung abgeschirmt und gegen mechanische Beanspruchung geschützt ausgeführt.

Die Ein-/Ausgabe-Baugruppe I/O weist eine Reihe von Tastern, Schaltern und weitere Eingabemittel auf, damit erforderliche Benutzereingaben durchgeführt werden können. Weiterhin weist diese Baugruppe optische und/oder akustische Signalisierungsmittel, wie beispielsweise Leuchtdioden, einen Bildschirm und/oder eine Sprachausgabe, auf, die dem Benutzer die Eingaben quittieren oder ausgewählte Betriebszustände anzeigen.

Im Betrieb werden alle Eingaben des Benutzers, beispielsweise über den Drehgeber DG, den Not-Aus-Taster NA und die Ein-/Ausgabebaugruppe I/O, den beiden Prozessoren CPU1 und CPU2 zur Vorverarbeitung zugeleitet. Dabei sind zwei Prozessoren CPU1 und CPU2 vorgesehen, die sich gegenseitig überwachen. Beiden Prozessoren CPU1 und CPU2 werden dafür die gleichen Eingangssignale zugeleitet und durch beide Prozessoren CPU1 und CPU2 derart vorverarbeitet, daß durch die wechselseitige Überwachung eine erhöhte Betriebssicherheit erreicht wird.

Die Vorverarbeitung besteht darin, daß aufgrund der Ausgangssignale des Drehgebers DG, des Not-Aus-Tasters NA und der Ein-/Ausgabe-Baugruppe I/O in beiden Prozessoren CPU1 und CPU2 aufgrund identischer Eingangssignale identische digitale Übertragungsdaten erzeugt werden, die in ein bestimmtes Übertragungsprotokoll eingefügt werden. Die derart erzeugten Übertragungsdaten werden von einem der beiden Prozessoren CPU1 oder CPU2 über die Schnittstelle INT ausgegeben. Gleichzeitig werden die Übertragungsdaten vom anderen Prozessor eingelesen und mit den vom anderen Prozessor selbst erzeugten Übertragungsdaten verglichen. Wird dabei Identität zwischen den empfangenen und den selbst erzeugten Übertragungsdaten durch den zweiten Prozessor CPU2 festgestellt, wird an den ersten Prozessor CPU1 ein Steuersignal zur Fortsetzung der Übertragung gesendet, indem ein Zustimmsignal erzeugt und über die Leitung ZT an die Steuerung LE übertragen wird. Erst nach Empfang dieses Zustimmsignals werden die Übertragungsdaten in der Steuerung LE weiterverarbeitet, z.B. zu Sollwertvorgaben für Regelkreise.

Sollte ein Prozessor einen Unterschied zwischen den aufgrund identischer Eingaben selbst erzeugten und den vom anderen Prozessor erzeugten Übertragungsdaten feststellen, wird zunächst ermittelt, ob eine tolerierbare Abweichung vorliegt. Eine derartige tolerierbare Abweichung liegt dann vor, wenn sich beispielsweise die durch die beiden Prozessoren CPU1 und CPU2 ermittelten Istwerte der Ausgangssignale des Drehgebers DG wegen geringfügig unterschiedlicher Abfragezeitpunkte, Quantisierungsrauschen und ähnlicher, die Betriebssicherheit nicht beeinflussender Einflüsse, geringfügig unterscheiden. In einem derartigen Fall wird trotz einer geringen Abweichung die Übertragung aufrechterhalten und von einem Prozessor das Zustimmsignal über die Leitung ZT an die Steuerung LE übertragen.

Sollte jedoch eine nicht tolerierbare Abweichung vorliegen, wird von beiden Prozessoren CPU1 und CPU2 eine Abschaltung ausgelöst, indem die Übertragung von Daten, die eine Bewegung auslösen, abgebrochen und vom zweiten Prozessor CPU2 kein Zustimmsignal mehr über die Leitung ZT an die Steuerung LE ausgegeben wird. Weiterhin besteht die Möglichkeit dies in der Steuerung LE zu erkennen und an den Benutzer eine Fehlermeldung auszugeben.

Sollte nur ein, beispielsweise nur der zweite Prozessor CPU2, eine nicht tolerierbare Abweichung erkennen, wird kein Zustimmsignal über die Leitung ZT angelegt. Die Steuerung LE erkennt dann, daß ein Fehler im Eingabegerät HR vorliegt und führt eine Fehlerbehandlung durch. Dabei werden sämtliche durch die Steuerung LE geregelten Achsen der Maschine stillgesetzt und an den Benutzer eine Fehlermeldung ausgegeben. Um eine zweikanalige Fehlerabschaltung zu realisieren wird zusätzlich von dem zweiten Prozessor CPU2, der den Fehler erkannt hat, über den gemeinsamen Speicher DPRAM dem anderen Prozessor CPU1 mitgeteilt, daß ein Fehler vorliegt. Auch der erste Prozessor CPU1 signalisiert der Steuerung LE dann einen Fehler. Sollte ein Fehler nur vom ersten Prozessor erkannt worden sein, wird die Datenübertragung durch den ersten Prozessor CPU1 unterbrochen und über den gemeinsamen Speicher DPRAM dem zweiten Prozessor CPU2 ein Fehler signalisiert, woraufhin der zweite Prozessor CPU2 kein Zustimmsignal mehr über die Leitung ZT an die Steuerung LE überträgt.

Alternativ oder zusätzlich zum wechselseitigen Vergleich der Übertragungsdaten kann der gemeinsame Speicher DPRAM der beiden Prozessoren CPU1 und CPU2 für einen Vergleich der unmittelbaren und unveränderten Ausgangssignale des Not-Aus-Tasters NA, des Drehgebers DG und der Ein-/Ausgabe-Baugruppe I/O in beiden Prozessoren CPU1 und CPU2 benutzt werden. Dabei schreibt ein Prozessor die empfangenen, unmittelbaren und unveränderten Ausgangssignale des Not-Aus-Tasters NA, des Drehgebers DG und der Ein-/Ausgabe-Baugruppe I/O in den gemeinsamen Speicher DPRAM. Der andere Prozessor liest diese unmittelbaren und unveränderten Ausgangssignale aus dem Speicher DPRAM aus und vergleicht sie mit den selbst empfangenen, unmittelbaren und unveränderten Ausgangssignalen des Drehgebers DG, des Not-Aus-Tasters NA und der Ein-/Ausgabe-Baugruppe I/O, die bis auf einen kleinen Toleranzbereich bei einem fehlerfreien Betrieb übereinstimmen müssen.

Stellen beide Prozessoren unter Berücksichtigung des Toleranzbereichs Übereinstimmung der Ausgangssignale fest, werden die Ausgangssignale wie bereits beschrieben über die Schnittstelle INT und eventuell nach einem weiteren, bereits oben beschriebenen Vergleich der Übertragungsdaten, an die Steuerung LE übertragen. Kann aber keine Übereinstimmung der Ausgangssignale festgestellt werden, wird eine Fehlerbehandlung durchgeführt, bei der eine Fehlermeldung an den Benutzer ausgegeben und die Antriebe der Maschine durch die Steuerung LE stillgesetzt werden. Dabei wird wie bereits bei einem fehlerhaften Vergleich der Übertragungsdaten beschrieben vorgegangen.

Um die Betriebssicherheit des Eingabegeräts HR weiter zu erhöhen, erfolgt eine gegenseitige redundante Überwachung der Spannungsversorgung durch die beiden Prozessoren CPU1 und CPU2. Liegt die Versorgungsspannung außerhalb bestimmter Grenzen, wird eine Fehlerbehandlungausgelöst.

Eine weitere Maßnahme zur Erhöhung der Betriebssicherheit des Eingabegeräts HR wird durch eine redundante Temperaturüberwachung bei temperaturempfindlichen und sicherheitsrelevanten Baugruppen erreicht. Überschreitet die Temperatur der überwachten Baugruppen einen oberen Grenzwert, wird ebenfalls eine Fehlerbehandlung ausgelöst.

Damit auch eine korrekte Verbindung zwischen der Steuerung LE und dem Eingabegerät HR überwacht und beispielsweise eine Störung im Verbindungskabel VK ermittelt werden kann, ist die Anwendung verschiedener Maßnahmen zur Sicherstellung einer hohen Übertragungssicherheit möglich.

Insbesondere geeignet ist dafür das unmittelbare Zurücksenden empfangener Übertragungsdaten vom Empfänger an den Sender, der die empfangenen Übertragungsdaten mit den ursprünglich gesendeten Übertragungsdaten auf Gleichheit überprüft. Dabei werden beispielsweise vom Eingabegerät HR an die Steuerung LE gesendete Übertragungsdaten von einem ersten Prozessor MCU der Steuerung LE empfangen und unverändert an den zweiten Prozessor CCU über den gemeinsamen Speicher GRAM weitergeleitet. Der zweite Prozessor CCU leitet die derart empfangenen Übertragungsdaten über einen anderen Speicherplatz des gemeinsamen Speichers GRAM wieder an den ersten Prozessor MCU der Steuerung LE zurück und dieser leitet die Übertragungsdaten an das Eingabegerät HR zurück.

Im Eingabegerät werden diese zurückgesendeten Übertragungsdaten über die Schnittstelle INT an beide Prozessoren CPU1 und CPU2 weitergeleitet. Diese führen dann einen Vergleich mit den ursprünglich gesendeten Übertragungsdaten durch. Wird bei diesem zweikanaligen Vergleich eine Übereinstimmung von ursprünglich gesendeten und empfangenen Übertragungsdaten erkannt, wird ein Zustimmsignal über die Leitung ZT an die Steuerung LE gesendet. Wird keine Übereinstimmung festgestellt, erfolgt eine zweikanalige Abschaltung mit Fehlerbehandlung. Eine derartige Rückübertragung von ursprünglich empfangenen Übertragungsdaten kann dabei nicht nur von der Steuerung LE an das Eingabegerät HR sondern auch umgekehrt vom Eingabegerät HR an die Steuerung LE erfolgen.

Alternativ zur Zurücksendung der kompletten Übertragungsdaten besteht auch die Möglichkeit nur eine Prüfsumme der Übertragungsdaten, die beispielsweise gemäß einem CRC-Algorithmus zur Datensicherung berechnet wurde, von der Steuerung LE an das Eingabegerät HR zurück zu übertragen und mit der ursprünglich erzeugten Prüfsumme zu vergleichen. Auch dadurch kann, bei wesentlich verringertem Übertragungsbedarf, eindeutig ein Übertragungsfehler erkannt werden, der zu einem unsicheren Betriebszustand führen könnte.

Eine weitere Möglichkeit die Übertragungssicherheit zwischen Eingabegerät und Steuerung LE zu steigern besteht darin, daß aus den Übertragungsdaten ein Fehlersicherungscode, beispielsweise ein CRC- oder Hammingcode, berechnet wird. Dieser wird im Eingabegerät HR von mindestens einem Prozessor CPU1 und/oder CPU2 berechnet und zu den Übertragungsdaten hinzugefügt. In der Steuerung LE, die die Übertragungsdaten empfängt, wird der Fehlersicherungscode aufgrund der empfangenen Übertragungsdaten entweder neu berechnet und mit dem übertragenen Fehlersicherungscode auf Gleichheit überprüft oder der übertragene Fehlersicherungscode decodiert und aufgrund dieser Decodierung ein Fehler in den Übertragungsdaten erkannt. Bei einem entsprechend komplexen Fehlersicherungscode kann ein einzelner Übertragungsfehler auch verbessert werden.

Das für die Übertragung zwischen Eingabegerät HR und Steuerung LE benutzte Übertragungsprotokoll wird im wesentlichen durch die Schnittstelle INT festgelegt und ist für eine serielle Übertragung von Daten geeignet. Die Übertragungsdaten beinhalten dabei alle Informationen, die der Benutzer über die am Eingabegerät HR vorgesehenen Eingabemittel, wie Not-Aus-Taster NA, Drehgeber DG und Ein-/Ausgabemittel I/O, eingegeben hat. Zusätzlich wird ausschließlich das Zustimmsignal über die Leitung ZT übertragen. Dadurch kann die Zahl der zum Kabel VK zusammengefaßten Übertragungsleitungen TxD, RxD, DTR, DSR und ZT auf ein Minimum reduziert werden.

Weiterhin kann auch durch die Übertragung von Testsignalen eine korrekte Erkennung einer fehlerhaften Übertragung zwischen dem Eingabegerät HR und der Steuerung LE sowie eine korrekte Auswertung überprüft werden. Dabei werden durch die Steuerung LE fehlerhafte Daten an das Eingabegerät HR zurückgesendet. Beide Prozessoren CPU1 und CPU2 müssen dann den Fehler unabhängig voneinander erkennen und entsprechende Fehlersignale an die Steuerung LE senden. Diese erwartet die Fehlersignale innerhalb einer bestimmten Zeitspanne. Werden die Fehlersignale vom Eingabegerät HR an die Steuerung LE übertragen, wird von der Steuerung LE, die den Test veranlaßt hat, keine Fehlerbehandlung durchgeführt. Werden die Fehlersignale aber nicht innerhalb der festgelegten Zeitspanne in der Steuerung LE empfangen, erkennt die Steuerung LE eine fehlerhafte Übertragung zum Eingabegerät HR bzw. eine fehlerhafte Auswertung und es wird eine entsprechende Fehlerbehandlung durchgeführt.

Um Fehler im Eingabegerät HR möglichst frühzeitig feststellen zu können, werden Testsignale ausgegeben, die gezielt eine Fehlfunktion einer Baugruppe signalisieren. Dabei muß vor der Ausgabe eines Testsignals der auswertenden Baugruppe signalisiert werden, daß ein Test durchgeführt wird und kein tatsächlicher Fehler, der eine Fehlerbehandlung erfordert, vorliegt. Anschließend wird überprüft, ob die Fehlfunktion in der auswertenden Baugruppe erkannt wird.

Es sind dem Fachmann weitere Verfahren und Vorrichtungen, insbesondere aus der Nachrichtentechnik, bekannt, die bei einer Datenübertragung zwischen Eingabegerät HR und Steuerung LE eine fehlerfreie Übertragung sischerstellen können. Diese Verfahren aus der Nachrichtentechnik können auch hier vorteilhaft zur Überwachung einer fehlerfreien Übertragung angewandt werden.

Bei einem Test des Not-Aus-Tasters NA beispielsweise wird von einem Prozessor, beispielsweise Prozessor CPU2, die Versorgungsspannung für den Not-Aus-Taster NA verändert. Gleichzeitig teilt der zweite Prozessor CPU2 dem anderen Prozessor CPU1 über den gemeinsamen Speicher DPRAM mit, daß ein Test des Not-Aus-Tasters NA durchgeführt wird. Dieser Prozessor CPU1 erwartet daraufhin innerhalb einer festgelegten Zeitspanne ein Not-Aus Signal. Falls dieses Not-Aus Signal in der festgelegten Zeitspanne auftritt, wird es vom Prozessor CPU1 nicht an die Steuerung LE weitergeleitet, da es sich nur um ein Testsignal handelt und der Test somit erfolgreich abgeschlossen wurde. Tritt das Not-Aus Signal aber nicht in der festgelegten Zeitspanne am Eingang des zweiten Prozessors CPU1 auf, wird ein Fehler erkannt und eine entsprechende Fehlerbehandlung durchgeführt.

Weiterhin ist auch dem Prozessor, der den Test nicht durchführt, bekannt, daß in bestimmten Zeitabständen ein Test bestimmter Baugruppen durch den anderen Prozessor erfolgen muß. Erfolgt dieser Test jedoch nicht, wird erkannt, daß der den Test durchführende Prozessor ausgefallen sein muß und es wird eine Fehlerbehandlung durchgeführt.

Falls während des Tests vom Benutzer tatsächlich der Not-Aus-Taster NA betätigt wird, wird dies vom anderen Prozessor CPU2 festgestellt, dem kein Testsignal zugeleitet wurde. Dann überträgt Prozessor CPU2 das Not-Aus Signal an die Steuerung LE, die eine Fehlerbehandlung durchführt. Bei der Fehlerbehandlung wird die gesamte Maschine stillgesetzt und an den Benutder eine Fehlermeldung ausgegeben, die die Ursache der Fehlerbehandlung angibt.

Der Test des Not-Aus-Tasters NA wird von beiden Prozessoren CPU1 und CPU2 zeitlich versetzt für beide redundanten Kanäle des Not-Aus-Tasters NA durchgeführt, so daß auch ein während einem Test vom Benutzer ausgelöster "echter" Not-Aus immer durchgeführt und vom anderen Kanal des Not-Aus Tasters NA detektiert werden kann.

So können Funktionstests auch für andere sicherheitsrelevante Baugruppen des Eingabegeräts HR erfolgen, ohne daß dabei die Prozessoren MCU und CCU der Steuerung LE belastet werden.

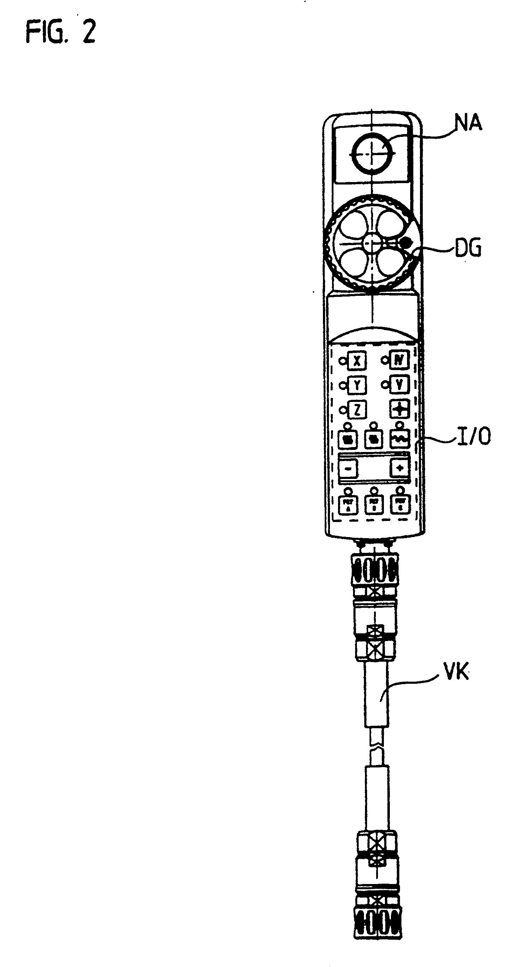

In Fig.2 ist eine mögliche Realisierungsform eines Eingabegeräts HR dargestellt. Dieses weist ein Handrad DG, einen Not-Aus Taster NA, sowie eine Baugruppe I/O mit verschiedenen Tasten für Eingaben und Leuchtdioden für optische Rückmeldungen auf. Das Eingabegerät HR wird über das Verbindungskabel VK, welches die einzelnen Verbindungsleitungen TxD, RxD, DTR, DSR, ZT usw. beinhaltet, mit der Steuerung LE verbunden.

## Patentansprüche

1. Numerische Steuerung mit einem räumlich getrennten Eingabegerät, wobei das Eingabegerät (HR) mindestens ein Eingabemittel (DG, NA, I/O) für Benutzereingaben aufweist und von dem Eingabegerät (HR) ein Zustimmsignal über eine Verbindungsleitung (ZT) an die Steuerung (LE) übertragbar ist, **dadurch gekennzeichnet, daß** im Eingabegerät (HR) mindestens zwei voneinander unabhängige Prozessoren (CPU1, CPU2) vorgesehen sind, die mit den Eingabemitteln (DG, NA, I/O) verbunden werden, daß mindestens ein Prozessor (CPU1) eine Vergleichseinrichtung zum Vergleich von aufgrund der Ausgangssignale der Eingabemittel (DG, NA, I/O) in den beiden Prozessoren (CPU1, CPU2) erzeugten Signalen auf Übereinstimmung aufweist, daß bei Vorliegen einer nicht tolerierbaren Abweichung der erzeugten Signale die Übertragung des Zustimmsignals an die Steuerung (LE) beendbar ist, und daß Mittel zur Erzeugung von wenigstens zwei unabhängigen Abschaltsignalen mit der Vergleichseinrichtung und über wenigstens zwei Verbindungsleitungen (ZT, TxD) mit der Steuerung (LE) verbunden sind, wobei eines der Abschaltsignale aus einem Beenden der Übertragung des Zustimmsignals bei Vorliegen einer nicht tolerierbaren Abweichung besteht.

2. Numerische Steuerung nach Anspruch 1, **dadurch gekennzeichnet, daß** das Eingabegerät (HR) mindestens einen Drehgeber (DG), einen Not-Aus-Taster (NA) und weitere Taster und Schalter (I/O) für Benutzereingaben aufweist.

3. Numerische Steuerung nach Anspruch 1 oder 2, **dadurch gekennzeichnet, daß** das Eingabegerät (HR) eine Schnittstellenschaltung (INT) aufweist, die die Ausgangssignale mindestens eines Prozessors (CPU2) für die Übertragung an die Steuerung (LE) aufbereitet.

4. Numerische Steuerung nach einem der Ansprüche 1 bis 3, **dadurch gekennzeichnet, daß** die Vergleichseinrichtung in mindestens einem Prozessor (CPU1, CPU2) integriert ist.

5. Numerische Steuerung nach einem der Ansprüche 1 bis 4, **dadurch gekennzeichnet, daß** die Mittel zur Erzeugung eines Abschaltsignals in mindestens zwei Prozessoren (CPU1, CPU2) integriert sind.

6. Numerische Steuerung nach einem der Ansprüche 1 bis 5, **dadurch gekennzeichnet, daß** das Eingabegerät (HR) ein Netzteil mit redundanter Spannungsüberwachung oder zwei unabhängige Netzteile (NT1, NT2) aufweist, die über mindestens zwei Leitungen mit unabhängigen Spannungsquellen verbunden sind.

7. Numerische Steuerung nach einem der Ansprüche 1 bis 6, **dadurch gekennzeichnet, daß** das Eingabegerät (HR) mindestens eine Baugruppe zur Spannungsüberwachung beinhaltet.

8. Numerische Steuerung nach einem der Ansprüche 1 bis 7, **dadurch gekennzeichnet, daß** das Eingabegerät (HR) mindestens eine Baugruppe zur Temperaturüberwachung beinhaltet.

9. Numerische Steuerung nach einem der Ansprüche 1 bis 8, **dadurch gekennzeichnet, daß** das Eingabegerät (HR) mindestens eine Baugruppe zur Erzeugung von Testsignalen beinhaltet.

10. Numerische Steuerung nach einem der Ansprüche 1 bis 9, **dadurch gekennzeichnet, daß** das Eingabegerät (HR) mindestens zwei Analog/digital-Wandler beinhaltet.

11. Numerische Steuerung nach einem der Ansprüche 1 bis 10, **dadurch gekennzeichnet, daß** die Baugruppen zur Spannungsüberwachung, Temperaturüberwachung, zur Erzeugung von Testsignalen und der mindestens eine Analog/digital-Wandler in mindestens einen Prozessor integriert sind.

12. Verfahren zum sicheren Betrieb eines räumlich getrennten Eingabegeräts (HR) an einer numerische Steuerung (LE), **dadurch gekennzeichnet, daß** die aus Benutzereingaben an den Eingabemitteln (DG, NA, I/O) resultierenden Ausgangssignale mindestens zwei Prozessoren (CPU1, CPU2) zugeleitet werden, daß die Ausgangssignale selbst oder die aufgrund der Ausgangssignale in den Prozessoren (CPU1, CPU2) erzeugten Signale in einer Vergleichseinrichtung auf Gleichheit überprüft werden und daß bei Vorliegen einer nicht tolerierbaren Abweichung mindestens zwei unabhängige Abschaltsignale über mindestens zwei Verbindungsleitungen (ZT, TxD) an die Steuerung (LE) übertragen werden, wobei eines der Abschaltsignale dadurch realisiert wird, daß die Übertragung eines Zustimmsignals an die Steuerung (LE) beendet wird.

13. Verfahren nach Anspruch 12, **dadurch gekennzeichnet, daß** die Abschaltsignale von beiden Prozessoren (CPU1, CPU2) unabhängig voneinander erzeugt werden.

14. Verfahren nach Anspruch 12 oder 13, **dadurch gekennzeichnet, daß** die Ausgangssignale der Eingabemittel (DG, NA, I/O) oder die aufgrund der Ausgangssignale in den Prozessoren (CPU1, CPU2) erzeugten Signale nur in einem bestimmten Toleranzbereich übereinstimmen müssen.

15. Verfahren nach einem der Ansprüche 12 bis 14, **dadurch gekennzeichnet, daß** Maßnahmen zur Überprüfung der Übertragungssicherheit zwischen dem Eingabegerät (HR) und der Steuerung (LE) durchgeführt werden.

16. Verfahren nach Anspruch 15, **dadurch gekennzeichnet, daß** von dem Eingabegerät (HR) an die Steuerung (LE) übertragene Signale an das Eingabegerät (HR) zurückübertragen werden, daß die derart empfangenen Signale im Eingabegerät (HR) mit den ursprünglich gesendeten und gespeicherten Signalen auf Übereinstimmung überprüft werden und daß bei fehlender Übereinstimmung eine Fehlerbehandlung ausgelöst wird.

17. Verfahren nach einem der Ansprüche 12 - 16, **dadurch gekennzeichnet, daß** zweikanalig ausgestaltete Schalteinrichtungen (NA) des Eingabegeräts (HR) sowie deren zweikanalige Auswertung zyklisch getestet werden und daß zunächst ein erster und anschließend ein zweiter Kanal der Schalteinrichtungen (NA) getestet wird.

18. Verfahren nach Anspruch 17, **dadurch gekennzeichnet, daß** der jeweils zugehörigen Auswerteeinheit ein Test signalisiert wird, daß das Eingangssignal eines ersten Kanals verändert wird, wodurch der zugehörigen Auswerteeinheit ein unsicherer Betriebszustand signalisiert wird, daß überprüft wird, ob die Auswerteeinheit des ersten Kanals den unsicheren Betriebszustand erkennt, daß anschließend das Eingangssignal eines zweiten Kanals verändert wird, wodurch ein unsicherer Betriebszustand signalisiert wird, daß überprüft wird, ob die Auswerteeinheit des zweiten Kanals den unsicheren Betriebszustand erkennt und daß eine Fehlerbehandlung durchgeführt wird, wenn nicht in den Auswerteeinheiten beider Kanäle ein unsicherer Betriebszustand erkannt wurde.

19. Verfahren nach einem der Ansprüche 12 - 17, **dadurch gekennzeichnet, daß** den von dem Eingabegeräts (HR) an die Steuerung (LE) und umgekehrt übertragenen Daten ein Fehlersicherungscode hinzugefügt wird.

20. Verfahren nach Anspruch 19, **dadurch gekennzeichnet, daß** nach der Übertragung der Daten und des Fehlersicherungscodes anhand des Fehlersicherungscodes überprüft wird, ob die Daten fehlerfrei sind und daß bei fehlender Übereinstimmung von übertragenen Daten und zugehörigem Fehlersicherungscode eine Fehlerbehandlung ausgelöst wird.

21. Verfahren nach einem der Ansprüche 12 - 20, **dadurch gekennzeichnet, daß** bei einer Fehlerbehandlung an den Benutzer eine Fehlermeldung, welche zumindest die Ursache der Fehlerbehandlung spezifiziert, ausgegeben wird, daß zumindest die vom Fehler betroffene Baugruppe der Steuerung und/oder der Maschine stillgesetzt wird.

## Claims

1. Numerical controller with a remote input device, wherein the input device (HR) has at least one input element (DG, NA, I/O) for user inputs and a compliance signal is transmissible from the input device (HR) via a connection lead (ZT) to the controller (LE), **characterised in that** in the input device (HR) at least two interdependent processors (CPU1, CPU2) are provided, which are connected to the input elements (DG, NA, I/O), that at least one processor (CPU1) has a comparator for comparison of signals generated in the two processors (CPU1, CPU2) on the basis of the output signals of the input elements (DG, NA, I/O) for conformity, that when a non-tolerable difference in the generated signals is present, the transmission of the compliance signal to the controller (LE) can be terminated, and that means for generating at least two independent shutdown signals are connected to the comparator and via at least two connection leads (ZT, TxD) to the controller (LE), wherein one of the shutdown signals comprises a termination of the transmission of the compliance signal when a non-tolerable difference is present.

2. Numerical controller according to Claim 1, **characterised in that** the input device (HR) has at least one encoder (DG), an emergency shutdown key (NA) and further keys and switches (I/O) for user inputs.

3. Numerical controller according to Claim 1 or 2, **characterised in that** the input device (HR) has an interface circuit (INT), which edits the output signals of at least one processor (CPU2) for transmission to the controller (LE).

4. Numerical controller according to one of Claims 1 to 3, **characterised in that** the comparator is integrated into at least one processor (CPU1, CPU2).

5. Numerical controller according to one of Claims 1 to 4, **characterised in that** the means for generating a shutdown signal are integrated into at least two processors (CPU1, CPU2).

6. Numerical controller according to one of Claims 1 to 5, **characterised in that** the input device (HR) has a power supply unit with redundant voltage monitoring or two independent power supply units (NT1, NT2), which are connected to independent voltage sources via at least two leads.

7. Numerical controller according to one of Claims 1 to 6, **characterised in that** the input device (HR) contains at least one assembly for voltage monitoring.

8. Numerical controller according to one of Claims 1 to 7, **characterised in that** the input device (HR) contains at least one assembly for temperature monitoring.

9. Numerical controller according to one of Claims 1 to 8, **characterised in that** the input device (HR) contains at least one assembly for generating test signals.

10. Numerical controller according to one of Claims 1 to 9, **characterised in that** the input device (HR) contains at least two analog/digital converters.

11. Numerical controller according to one of Claims 1 to 10, **characterised in that** the assemblies for voltage monitoring, temperature monitoring, for generating test signals and the at least one analog/digital converter are integrated into at least one processor.

12. Method for the reliable operation of a remote input device (HR) on a numerical controller (LE), **characterised in that** the output signals resulting from user inputs at the input elements (DG, NA, I/O) are fed to at least two processors (CPU1, CPU2), that the output signals themselves or the signals generated in the processors (CPU1, CPU2) on the basis of the output signals are checked for conformity in a comparator, and that when a non-tolerable difference is present at least two independent shutdown signals are transmitted to the controller (LE) via at least two connecting leads (ZT, TxD), wherein one of the shutdown signals is implemented by the transmission of a compliance signal to the controller (LE) being terminated.

13. Method according to Claim 12, **characterised in that** the shutdown signals are generated independently of one another by the two processors (CPU1, CPU2).

14. Method according to Claim 12 or 13, **characterised in that** the shutdown signals of the input elements (DG, NA, I/O) or the signals generated in the processors (CPU1, CPU2) on the basis of the output signals only have to be in conformity in a specific tolerance range.

15. Method according to one of Claims 12 to 14, **characterised in that** measures are conducted for checking the transmission reliability between the input device (HR) and the controller (LE).

16. Method according to Claim 15, **characterised in that** signals transmitted to the controller (LE) from the input device (HR) are transmitted back to the input device (HR), that the signals received in this manner in the input device (HR) are checked for conformity with the originally transmitted and stored signals, and that in the absence of conformity an error treatment is activated.

17. Method according to one of Claims 12 - 16, **characterised in that** switching means (NA) of the input device (HR) of dual-channel configuration as well as their dual-channel evaluation are tested cyclically, and that a first and then a second channel of the switching means (NA) is tested.

18. Method according to Claim 17, **characterised in that** a test is signalled to the respectively associated evaluation unit, that the input signal of a first channel is changed, as a result of which an unreliable operating status is signalled to the associated evaluation unit, that it is checked whether the evaluation unit of the first channel recognises the unreliable operating status, that the input signal of a second channel is then changed, as a result of which an unreliable operating status is signalled, that it is checked whether the evaluation unit of the second channel recognises the unreliable operating status, and that an error treatment is performed if an unreliable operating status was not recognised in the evaluation units of both channels.

19. Method according to one of Claims 12 - 17, **characterised in that** an error protection code is added to the data transmitted by the input device (HR) to the controller (LE) and vice versa.

20. Method according to Claim 19, **characterised in that** after transmission of the data and the error protection code it is checked on the basis of the error protection code whether the data are free from errors, and that in the absence of conformity of the transmitted data and associated error protection code an error treatment is activated.

21. Method according to one of Claims 12 - 20, **characterised in that** during an error treatment an error message is transmitted to the user, which at least specifies the cause of the error treatment, that at least the assembly of the controller and/or the machine affected by the error is shut down.

## Revendications

1. Commande numérique avec un dispositif d'entrée à distance (HR) qui comprend au moins un moyen d'entrée (DG, NA, I/O) pour l'utilisateur, et à partir duquel peut être transmis à la commande (LE) un signal d'approbation par un conducteur de liaison (ZT), **caractérisée en ce que**
- dans le dispositif d'entrée (HR) sont prévus au moins deux processeurs (CPU1, CPU2) indépendants l'un de l'autre et qui sont reliés au moyen d'entrée (DG, NA, I/O),
- au moins un processeur (CPU1) présente un dispositif pour comparer des signaux,produits dans les deux processeurs (CPU1, CPU2) à partir des signaux de sortie des moyens d'entrée (DG, NA, I/O), et déterminer s'ils sont identiques,
- si les signaux produits présentent un écart non tolérable, la transmission du signal d'approbation à la commande (LE) est interrompue,
- des moyens pour produire au moins deux signaux de coupure indépendants sont reliés au dispositif de comparaison, et par au moins deux conducteurs de liaison (ZT, TxD) à la commande (LE), un des signaux de coupure étant constitué par l'arrêt de la transmission du signal d'approbation quand existe un écart non tolérable.

2. Commande numérique selon la revendication 1, **caractérisée en ce que** le dispositif d'entrée (HR) comprend au moins un volant (DG), un clavier de coupure d'urgence (NA) et d'autres claviers et contacteurs (I/O) pour les entrées effectuées par l'utilisateur.

3. Commande numérique selon la revendication 1 ou 2, **caractérisée en ce que** le dispositif d'entrée (HR) présente un circuit d'interface (INT) qui traite les signaux de sortie d'au moins un processeur (CPU2) pour leur transmission à la commande (LE).

4. Commande numérique selon une des revendications 1 à 3, **caractérisée en ce que** le dispositif de comparaison est intégré à au moins un processeur (CPU1, CPU2).

5. Commande numérique selon une des revendications 1 à 4, **caractérisée en ce que** les moyens pour produire un signal de coupure sont intégrés à au moins deux processeurs (CPU1, CPU2).

6. Commande numérique selon une des revendications 1 à 5, **caractérisée en ce que** le dispositif d'entrée (HR) comprend une partie de réseau avec une surveillance de tension redondante ou deux parties de réseau indépendantes (NT1, NT2) qui sont reliées par au moins deux conducteurs à des sources de tension indépendantes.

7. Commande numérique selon une des revendications 1 à 6, **caractérisée en ce que** le dispositif d'entrée (HR) comprend au moins un module pour surveiller la tension.

8. Commande numérique selon une des revendications 1 à 7, **caractérisée en ce que** le dispositif d'entrée (HR) comprend au moins un module pour surveiller la température.

9. Commande numérique selon une des revendications 1 à 8, **caractérisée en ce que** le dispositif d'entrée (HR) comprend au moins un module pour produire des signaux de test.

10. Commande numérique selon une des revendications 1 à 9, **caractérisée en ce que** le dispositif d'entrée (HR) comprend au moins deux convertisseurs analogique/numérique.

11. Commande numérique selon une des revendications 1 à 10, **caractérisée en ce que** les modules de surveillance de tension, de surveillance de température, de production de signaux de test et au moins un convertisseur analogique/numérique sont intégrés au processeur.

12. Procédé pour un fonctionnement sûr d'un dispositif d'entrée à distance (HR) associé à une commande numérique (LE), **caractérisé en ce que** les signaux de sortie résultant des données introduites par l'utilisateur par des éléments d'entrée (DG, NA, I/O) sont adressés à au moins deux processeurs (CPU1, CPU2), et ces signaux eux-mêmes ou ceux produits à partir d'eux sont contrôlés en ce qui concerne leur similitude dans un dispositif de comparaison et, dans le cas où apparaît un écart non tolérable, au moins deux signaux de coupure indépendants sont transmis par au moins deux conducteurs de liaison (ZT, TxD) à la commande (LE). Un des signaux de coupure résultant du fait que la transmission d'un signal d'approbation adressé à la commande (LE) a cessé.

13. Procédé selon la revendication 12, **caractérisé en ce que** les signaux de coupure sont produits indépendamment l'un de l'autre par les deux processeurs (CPU1, CPU2).

14. Procédé selon la revendication 12 ou 13, **caractérisé en ce que** les signaux de sortie des moyens d'entrée (DG, NA, I/O) ou les signaux produits à partir de ces signaux de sortie dans les processeurs (CPU1, CPU2) doivent coïncider avec seulement une tolérance définie.

15. Procédé selon une des revendications 12 à 14, **caractérisé en ce que** des dispositions sont prises pour contrôler la sûreté de la transmission entre le dispositif d'entrée (HR) et la commande (LE).

16. Procédé selon la revendication 15, **caractérisé en ce que** les signaux transmis du dispositif d'entrée (HR) à la commande (LE) sont retransmis au dispositif d'entrée (HR), de manière que les signaux reçus alors par celui-ci sont contrôlés en ce qui concerne leur similitude avec les signaux initialement envoyés et mémorisés, un traitement d'erreur étant déclenché en cas de défaut de similitude.

17. Procédé selon une des revendications 12, à 16, **caractérisé en ce que** les dispositifs de commutation (NA), à deux canaux, du dispositif d'entrée (HR) ainsi que leur exploitation à deux canaux sont testés cycliquement, le test étant appliqué d'abord au premier et ensuite au deuxième canal des dispositifs de commutation (NA).

18. Procédé selon la revendication 17, **caractérisé en ce que**
- un test est signalé à une unité d'évaluation correspondante,
- le signal d'entrée d'un premier canal est modifié, ce qui signale à l'unité d'évaluation un état de fonctionnement qui n'est pas sûr,
- on examine si l'unité d'évaluation du premier canal reconnaît l'état de fonctionnement non sûr,
- ensuite le signal d'entrée d'un second canal est modifié, de sorte qu'un état de fonctionnement non sûr est signalé,
- on examine si l'unité d'évaluation du second canal reconnaît l'état de fonctionnement non sûr,
- un traitement d'erreur est effectué si, dans les unités d'évaluation des deux canaux, un état de fonctionnement non sûr n'a pas été reconnu.

19. Procédé selon une des revendications 12 à 17, **caractérisé en ce qu'**aux données transmises du dispositif d'entrée (HR) à la commande (LE) et inversement, est adjoint un code de sécurité contre les erreurs.

20. Procédé selon la revendication 19, **caractérisé en ce qu'**après la transmission des données et du code de sécurité, on examine à l'aide de ce code, si les données sont dépourvues d'erreur et, en cas d'absence de concordance des données transmises et du code de sécurité correspondant, un traitement d'erreur est effectué.

21. Procédé selon une des revendications 12 à 20, **caractérisé en ce que** dans le cas d'un traitement d'erreur, à l'utilisateur est délivrée une information d'erreur qui spécifie au moins la cause du traitement de l'erreur et au moins le module de la commande et/ou de la machine, concerné par l'erreur, est mis à l'arrêt.
